Europäisches Patentamt

European Patent Office

Office européen des brevets

(19)

(11) Veröffentlichungsnummer: **0 420 108 B1**

(12) **EUROPÄISCHE PATENTSCHRIFT**

(45) Veröffentlichungstag der Patentschrift: **08.06.94**

(51) Int. Cl.⁵: **G01J 5/60**

(21) Anmeldenummer: **90118315.2**

(22) Anmeldetag: **24.09.90**

(54) **Mehrwellenlängen-Pyrometer.**

(30) Priorität: **25.09.89 LU 87595**

(43) Veröffentlichungstag der Anmeldung:
**03.04.91 Patentblatt 91/14**

(45) Bekanntmachung des Hinweises auf die
Patenterteilung:
**08.06.94 Patentblatt 94/23**

(84) Benannte Vertragsstaaten:
**AT BE CH DE DK ES FR GB GR IT LI LU NL SE**

(56) Entgegenhaltungen:
**DD-A- 254 114**
**DE-A- 3 611 634**
**FR-A- 2 572 523**
**GB-A- 2 179 446**

**OPTICAL ENGINEERING, Band 24, Nr. 6, November/Dezember 1985, Seiten 1081-1085, Society of Photo-Optical Instrumentation Engineers, Bellingham, US; G.B. HUNTER: "Multiwavelength pyrometry: an improved method"**

**PATENT ABSTRACTS OF JAPAN, Band 9, Nr. 327 (P-415)[2050], 21. Dezember 1985; & JP-A-60 152 924**

(73) Patentinhaber: **EUROPÄISCHE ATOMGEMEIN-SCHAFT (EURATOM)**
**Bâtiment Jean Monnet**
**Plateau du Kirchberg**
**L-2920 Luxembourg(LU)**

(72) Erfinder: **Ronchi, Claudio**
**Gartenstrasse 37**
**D-7528 Neuthard(DE)**
Erfinder: **Beukers, Rutger**
**Buhlstrasse 3A**
**D-7502 Ettlingen(DE)**
Erfinder: **Heinz, Wilhelm**
**Nelkenstrasse 3A**
**D-7515 Linkenheim(DE)**
Erfinder: **Selfslag, Raoul François C.**
**L-Neck-Strasse 16**
**D-7514 Eggenstein(DE)**
Erfinder: **Hiernaut, Jean-Pol**
**H. Meierheuserstrasse 8**
**D-7515 Linkenheim(DE)**

(74) Vertreter: **Weinmiller, Jürgen**
**Lennéstrasse 9**
**Postfach 24**
**D-82336 Feldafing (DE)**

# Beschreibung

Die Erfindung bezieht sich auf ein Verfahren zur Messung von Temperatur und Emissionsgrad einer Oberfläche oberhalb 900 K, mit einem Mehrwellenlängen-Pyrometer für mehrere verschiedene Wellenlängen $\lambda_1...\lambda_i...\lambda_n$ und einem Datenprozessor, der die Ausgangssignale für die einzelnen Wellenlängen nach einer Digitalisierung zugeführt erhält und daraus mit Hilfe des Wien-Planck'schen Gesetzes die Temperatur unter der Annahme errechnet, daß es sich bei der Oberfläche um einen idealen schwarzen Körper handelt, worauf der Emissionsgrad abhängig von der Temperatur und der Wellenlänge aus diesen Temperaturwerten gemäß einem Näherungsansatz und daraus die gesuchte Temperatur errechnet wird.

Aus der Zeitschrift Temperature, Vol, 5, 1982, Seiten 439 bis 446, ist ein schnelles Pyrometer der angegebenen Art bekannt. Auf die zu messende Oberfläche ist ein optisches System ausgerichtet, das sich mit Hilfe von einem Glasfaserbündel in sechs Kanäle aufspaltet, und über schmalbandige Bandfilter zu den Photodioden geführt wird. Die Detektorsignale werden dann digitalisiert und in einem Prozessor ausgewertet.

Die Auswertung beruht auf den Wien-Planck-Gleichung für schwarze Körper

$$L = C_1 . \lambda^{-5}[\exp(C_2/\lambda T)-1)]^{-1} \qquad (1)$$

wobei L die Strahldichte bei der Wellenlänge $\lambda$, $C_1$ und $C_2$ Konstanten und T die Temperatur des schwarzen Körpers ist.

Da die zu untersuchende Oberfläche in der Regel kein idealer schwarzer Körper ist, muß der Emissionsgrad E berücksichtigt werden, der das Verhältnis zwischen der Strahldichte des schwarzen Körpers und des reellen Körpers darstellt.

Dieser Emissionsgrad ist temperatur- und wellenlängenabhängig und kann durch eine Taylor-Reihe der folgenden Form ausgedrückt werden kann:

$$\ln E = a_0 + a_1\lambda + a_2\lambda^2 + ... \qquad (2)$$

Erfahrungsgemäß ist die Wellenlängenabhängigkeit in begrenzten Wellenlängenbereichen eine stetige Funktion, so daß die Reihe (2) nach wenigen Termen abgebrochen werden kann.

In dem erwähnten Artikel wird deshalb vorgeschlagen, eine lineare Annäherung der Funktion (2) zu wählen und aus den sechs Meßwerten der Strahldichte gemäß den sechs Wellenlängen des Pyrometers jeweils zwei Wellenlängen gemeinsam auszuwerten und dann durch die Analyse der Quadrate der Abweichungen der einzelnen Resultate die Temperatur zu bestimmen.

Es hat sich gezeigt, daß dieses Verfahren für schwierige Fälle zu Ergebnissen führt, bei denen keine zuverlässige Aussage über ihre Präzision möglich ist.

So gelten als schwierig pyrometrische Messungen von hochreflektierenden Oberflächen, wo der Emissionsgrad sehr niedrig und wegen möglicher Oberflächenreaktionen sehr schwankend ist (z.B. Aluminium während Metallurgiebehandlungen).

Die Druckschrift DE-A-3 611 634 bezieht sich auf ein pyrometrisches Meßverfahren, bei dem die Differenzen zwischen den gemessenen spektralen Signalspannungen und den hypothetischen Spannungen errechnet werden. Um die hypothetischen Spannungen zu berechnen, werden gespeicherte Daten für verschiedene Oberflächenmaterialien benutzt.

Ein anderes Verfahren, bei dem Differenzen zwischen gemessenen und hypothetischen Signalen gebildet werden, um die Temperatur genau zu berechnen, ist aus JP-A-60 152 924 (vgl. English Abstract) bekannt.

Aufgabe der Erfindung ist es, ein Verfahren für ein Mehrwellenlängenpyrometer der eingangs genannten Art so zu verbessern, daß der Rechenaufwand und der Restfehler verringert werden und auch bei sehr ungünstigen Meßbedingungen noch brauchbare Resultate erzielt werden können.

Diese Aufgabe wird erfindungsgemäß durch das im Anspruch 1 definierte Verfahren gelöst. Bezüglich eines Merkmals eines bevorzugten Ausführungsbeispiels dieses Verfahrens wird auf den abhängigen Anspruch verwiesen.

Die Erfindung wird nun anhand eines bevorzugten Ausführungsbeispiels mit Hilfe zweier Figuren näher erläutert.

Figur 1 zeigt ein Flußdiagramm für die vom Prozessor auszuführenden Operationen.

Figur 2 zeigt schematisch ein Pyrometer gemäß der Erfindung.

Ein Sechswellenlängenpyrometer 1, wie es in dem einleitend erwähnten Aufsatz in "Temperature" beschrieben ist, liefert gleichzeitig sechs Strahlungsintensitätswerte eines vom Pyrometer beobachteten Körpers bzw. seiner Oberfläche, wobei die in der Praxis verwendeten Wellenlängen zwischen 400 und 2000 nm liegen. Die Bandbreite eines Meßkanals liegt unter 100 nm.

Die zur Intensität proportionalen Meßwerte werden in bekannter Weise in Fotodioden gewonnen und dann digitalisiert einem Prozessor 2 angeboten. Dieser stellt zuerst einmal fest, ob die Signale hinreichend stabil sind, d.h., ob der Rauschpegel hinreichend niedrig ist. Nur wenn dies der Fall ist, läßt sich die Temperatur mit einem hinreichend kleinen Fehler berechnen (Signalstandard-Abweichung: $S_o$). Dann wird der Ansatz für die Bestimmung des Emissionsgrads E gemäß der Gleichung 2 ausgewählt. Man unterscheidet zwischen einem Modell nullter Ordnung, bei dem ln E eine von der Wellenlänge unabhängige Konstante a ist, einem Modell erster Ordnung, bei dem ln E linear von der Wellenlänge abhängt (der Ansatz wird definiert durch die Bestimmung von $a_0$ und $a_1$) und Modellen höherer Ordnung, bei denen weitere Glieder der Taylor-Reihe verwertet werden müssen.

Zuerst wird von einem Modell erster Ordnung ausgegangen, und es werden $a_0$ und $a_1$ und damit der Emissionsgrad für die sechs Wellenlängen bestimmt, wobei $a_0$ und $a_1$ in allen sechs Bestimmungsgleichungen denselben Wert haben müssen. Im Kern besteht die Berechnung aus einer Subroutine, die die Summe der Quadrate der Abweichungen zwischen den gemessenen Signalen und den mit Hilfe des durch $a_0$ und $a_1$ definierten Werts des Emissionsgrads errechneten Strahlstärke minimisiert und die resultierende Standard-Abweichung $S_K$ der Fittingsprozedur berechnet.

Die erwarteten Temperatur- und Emissionsgradfehler werden als die Differentiale berechnet, die durch aufeinanderfolgende Inkrementierung der Signale bei dem jeweiligen Fehler und durch erneute Berechnung von Temperatur und Emissionsgrad erhalten werden. Es empfiehlt sich dann zu überprüfen, ob nicht auch ein Modell nullter Ordnung anwendbar wäre, da dieses einen geringeren absoluten Fehler in der Temperaturermittlung bietet. Dieser Fall ist dann gegeben, wenn die Konstante $a_1$ aus der Gleichung 2 unter einem gegebenen Wert liegt, d.h. wenn der Emissionsgrad von der Wellenlänge praktisch nicht abhängt. In diesem Fall erhält man also sechs voneinander unabhängige Temperaturmessungen bei den verschiedenen Wellenlängen.

Die Auswahl von Modellen höherer Ordnung führt zu einer Verringerung der Standard-Abweichung $S_K$, aber nicht unbedingt des Temperaturfehlers. Im Gegenteil, wenn $S_K$ den Wert von $S_0$ erreicht, ergibt jede weitere Erhöhung der Modellanordnung (overfitting) meist nicht eine geringere, sondern eine größere Ungenauigkeit der Temperatur. Wenn bei der Fehlerauswertung festgestellt wird, daß der Fehler ansteigt, hat man das optimale Modell gefunden und die Konstanten $a_1$, $a_2,...a_j$ festgelegt.

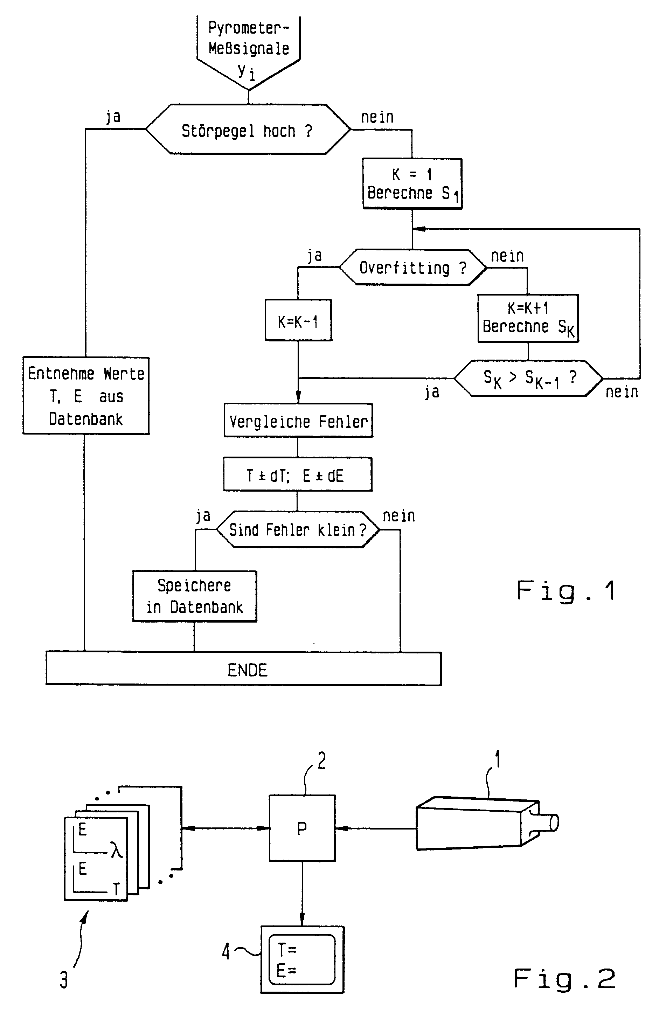

Hat die Fehleranalyse ergeben, daß der Fehler besonders klein ist, dann empfiehlt es sich, die die Temperatur, die Wellenlänge und den Emissionsgrad verknüpfende Kurvenschar für spätere Verwendungszwecke abzuspeichern. Man baut sich also eine nach der Art der Materialien der zu untersuchenden Oberfläche geordnete Datenbank auf, auf die man später zurückgreifen kann. Dies ist insbesondere von Wert, wenn bei einer späteren Messung sehr ungünstige Meßbedingungen vorliegen, z.B. farbendifferenzierte Rauchentwicklung im optischen Pfad des Pyrometers oder Instabilitäten in der Elektronik aufgrund hoher Umgebungstemperatur. In diesem Fall vergleicht man lediglich die Pyrometermeßwerte mit für gleiche Materialien früher ermittelten Kurvenscharen und kann daraus die Temperatur unmittelbar errechnen. Eine solche von den am wenigsten gestörten Signalen gespeiste Datenbank ist in Fig. 2 mit dem Bezugszeichen 3 versehen dargestellt. Mit den Daten dieser Datenbank können auch andere einfarbige Pyrometer parallel betrieben werden.

Mit dem erfindungsgemäßen Pyrometer lassen sich auch unter ungünstigen Bedingungen die gewünschten Berechnungen innerhalb von einer Millisekunde durchführen, so daß auf einem Bildschirm 4 praktisch in Echtzeit der Kurvenverlauf der Temperatur oder des Emissionsgrads über die Zeit auch für rasch ablaufende Vorgänge, wie z.B. die Impulsheizung mit einem Laser, dargestellt werden können. Damit eröffnen sich der Analyse rasch ablaufender Vorgänge im Temperaturbereich oberhalb von 700 K und bis zu 10.000 K neue Möglichkeiten.

## Patentansprüche

1.  Verfahren zur Messung von Temperatur und Emissionsgrad einer Oberfläche oberhalb 900 K, mit einem Mehrwellenlängen-Pyrometer für mehrere verschiedene Wellenlängen λ1... λi... λn und einem Datenprozessor, der die Ausgangssignale des Pyrometers für die einzelnen Wellenlängen nach einer Digitalisierung zugeführt erhält und daraus mit Hilfe des Wien-Planck'schen Gesetzes die Temperatur unter der Annahme errechnet, daß es sich bei der Oberfläche um einen idealen schwarzen Körper handelt, worauf der Emissionsgrad abhängig von der Temperatur und der Wellenlänge aus diesen errechneten Temperaturwerten gemäß einem Näherungsansatz und daraus die gesuchte Temperatur errechnet wird, dadurch gekennzeichnet, daß die Differenzen zwischen den Pyrometersignalen und den aufgrund des angenommenen Emissionsgrads und der daraus errechneten gesuchten Temperatur zu erwartenden Pyrometersignalen für verschiedene der Näherungsansätze und die verschiedenen Wellenlängen errechnet werden und daß dann derjenige Näherungsansatz vom Datenprozessor ausgewählt wird, der für alle Wellenlängen die geringste Summe der Quadrate dieser Differenzen ergibt.

2.  Verfahren nach Anspruch 1, dadurch gekennzeichnet, daß eine Datenbank für den Emissionsgrad bestimmter Materialien in Abhängigkeit von der Temperatur und Wellenlänge aufgebaut wird und daß der Prozessor auch diese Datenbank zur Errechnung der Temperatur heranzieht, wenn die gleichen Materialien einer Pyrometermessung zugrundeliegen.

## Claims

1. A method for measuring the temperature and emission rate of a surface above 900 K comprising a multiwavelengths pyrometer which is sensitive to different wavelengths $\lambda 1... \lambda i... \lambda n$, and a data processor which receives the output signals of the pyrometer after A-D conversion, and deduces therefrom, by means of the Wien-Planck law, the temperature, assuming that the surface is an ideal black body, the emission rate being then computed from these temperature values according to an approximation law as a function of temperature and the wavelength and from this the wanted temperature is computed, characterized in that the differences between the pyrometer signals and the pyrometer signals to be expected due to the assumed emission rate and the desired temperature deduced therefrom are computed for several of the approximation laws and the different wavelengths, and that then that approximation law is selected which represents for all the wavelengths the lowest sum of the squares of these differences.

2. A multiwavelengths pyrometer according to claim 1, characterized in that a data bank is established for the emission rate of certain materials as a function of temperature and wavelength, and that the processor also uses this data bank for computing the temperature when the same materials are subjected to a pyrometer measurement.

## Revendications

1. Procédé pour mesurer la température et l'émissivité d'une surface au-delà de 900 K à l'aide d'un pyromètre multifréquence qui opère à plusieurs longueurs d'onde $\lambda 1... \lambda i... \lambda n$, et d'un processeur de données qui reçoit les signaux de sortie du pyromètre pour les différentes longueurs d'onde après conversion en numérique et qui en calcule la température à l'aide de la loi Wien-Planck en supposant que la surface à analyser appartient à un corps noir idéal, l'émissivité étant alors calculée en fonction de la température et de la longueur d'onde à partir des valeurs de température calculées selon une formule d'approximation, et la température recherchée en étant déduite, caractérisé par le fait que les différences entre les signaux de pyromètre et des signaux attendus à base de l'émissivité hypothétique et de la température recherchée qui en était déduite sont calculées pour plusieurs des lois d'approximation et pour les différentes longueurs d'onde et que le processeur de données sélectionne ensuite celle des lois d'approximation qui produit pour toutes les longueurs d'onde la moindre somme de carrés de ces différences.

2. Procédé selon la revendication 1, caractérisé en ce qu'on établit un banc de données pour l'émissivité de certains matériaux en fonction de la température et des longueurs d'onde et que le processeur profite également de ce banc de données pour le calcul de la température lorsqu'une mesure pyrométrique concerne les mêmes matériaux.

EP 0 420 108 B1

Fig.1

Fig.2